# EUROPÄISCHE PATENTSCHRIFT

(11) **EP 4 449 845 B1**
(45) Veröffentlichungstag und Bekanntmachung des Hinweises auf die Patenterteilung: **29.04.2026**
(21) Anmeldenummer: 24168247.5
(22) Anmeldetag: 03.04.2024
(51) Int. Cl.: A01D 17/10, B65G 15/52

(54) **STABBAND**
ROD BELT
BANDE À BARREAUX

(30) Priorität: 06.04.2023 US 202318131525
(43) Veröffentlichungstag der Anmeldung: 23.10.2024
(73) Patentinhaber: Arnold Jäger Holding GmbH, 30559 Hannover (DE)
(72) Erfinder: OORD, Johan, 9717 KV Groningen (NL); JÄGER, Sebastian, 30657 Hannover (DE); ADRICHEM, Johan E., 1911ee Uitgeest (NL)
(74) Vertreter: Lüdtke, Thomas

(56) Entgegenhaltungen:
- EP-A1- 0 664 074
- EP-B1- 2 813 135
- NL-C2- 2 012 826

## Beschreibung

Die Erfindung betrifft ein Stabband gemäß dem Oberbegriff des Anspruches 1.

Stabbänder für Stabbandförderer landwirtschaftlicher Maschinen sind beispielsweise wie in der DE 195 20 927 A1 offenbart aufgebaut. Derartige Stabbänder weisen zwei oder mehrere parallel zueinander verlaufende, zugfeste elastische und endlose Riemen auf, die durch eine Vielzahl von quer zur Laufrichtung des Stabbandes und parallel zueinander angeordneten Stäben miteinander verbunden sind. Zur Festlegung der Stäbe an den Riemen besitzen die Stäbe abgeflachte und gelochte Auflagebereiche, mit denen sie auf den Riemen aufliegen. Die Verbindung der Auflagebereiche mit den Riemen erfolgt durch Niete oder ähnliche Befestigungsmittel, die den Auflagebereich und die Gurte durchsetzen.

Weitere Stabbänder für landwirtschaftliche Maschinen sind offenbart in DE 27 15 108 A1, WO 95/23497 A1, DE 20 2007 015687 U1 und DE 37 37 066 A1. In DE 200 11 436 U1 oder EP 2 813 135 B1 sind ferner Stabbänder beschrieben, bei denen die Stäbe an ihren Enden nicht direkt mit den Riemen verbunden sind, sondern jeweils über ein aus Rundstahl geschmiedetes Endstück mit daran angeschweißten Hülsen oder Buchsen bzw. ein als Stanzbiegeteil ausgeführtes Befestigungsstück. Die Befestigungsstücke besitzen einen abgeflachten und gelochten Auflagebereich, der in einen Zwischenbereich in Form einer von der Riemenoberseite nach oben verlaufenden Abkröpfung bzw. eines nach unten abgewinkelten Winkelstückes übergeht. An der Abkröpfung ist in DE 200 11 436 U1 ein Befestigungsbereich zur Aufnahme der Stabenden in Form einer Hülse befestigt, während als Befestigung in EP 2 813 135 B1 direkt das Winkelstück dient, wobei die Stäbe darin durch Löcher im Winkelstück gesteckt werden. Die Befestigungsstücke liegen mit ihren Auflagebereichen auf der Oberseite der Gurte auf und sind auf diesen durch Niete befestigt. Die Stäbe bestehen aus Kunststoff und werden durch Verklemmen oder Vernieten an dem jeweiligen Befestigungsbereich festgelegt.

Nachteilig hierbei ist, dass die Herstellung des geschmiedeten und abgekröpften Endstückes gemäß DE 200 11 436 U1 sehr aufwändig ist und durch die nach oben gerichtete Abkröpfung Siebfläche verloren geht und zur Seite hin auch keine Begrenzung der Siebfläche gegeben ist. Ferner ist eine senkrechte Abkröpfung für den darin geschmiedeten Rundstahl nicht möglich, so dass Siebfläche verloren geht. In EP 2 813 135 B1 ist zudem nachteilig, dass der Übergang zwischen dem Stab und dem blechgeformten Winkelstück nicht sehr stabil ist, so dass der Stab bei erhöhten Biegemomenten im Betrieb des Stabbandes nicht sicher am Winkelstück gehalten werden kann. Insgesamt ist die Stabilität bei einem solchen Blechformteil also geringer und dadurch ein dauerhafter Betrieb gefährdet. Ferner übertragen sich erhöhte Temperaturen am Riemen direkt auf die Stäbe.

In EP 0 664 074 A1 ist ferner vorgesehen, dass die Stäbe an ihren Enden im Bereich des inneren Riemens übereinanderliegen und sich überlappen und dabei einen gegen Querkräfte wirksamen Formschluss aufweisen, beispielsweise durch eine komplementäre Form, beispielsweise konvex und konkav, oder sich überlappende Abschnitte gestuft sind. Nachteilig hierbei ist, dass die endseitige Bearbeitung der Stäbe aufwendig ist und auch eine direkte Anbringung der Stäbe an die Riemen aufwendig und weniger stabil ist.

Ein weiteres Stabband ist in NL 2 012 826 C2 beschrieben, wobei zwischen zwei Riemen mehrere Stabanordnungen aus jeweils zwei Stäben verlaufen, wobei die beiden Stäbe einer Stabanordnung mittig miteinander verbunden sind. Zum Verstärken dieser mittigen Verbindung ist ein zentrales Befestigungsmittel beschrieben, das sich parallel zu den seitlichen Förderbändern über sämtliche mittigen Verbindungen erstreckt.

Aufgabe der Erfindung ist daher ein Stabband bereitzustellen, das einfach und günstig herzustellen ist und weiterhin eine hohe Stabilität oder Robustheit in der Verbindung aufweist.

Diese Aufgabe wird durch ein Stabband gemäß Anspruch 1 gelöst. Die Unteransprüche geben dabei bevorzugte Weiterbildungen an.

Demnach ist ein Stabband für landwirtschaftliche Maschinen mit quer zu der Laufrichtung und parallel zueinander angeordneten Stäben vorgesehen, die jeweils zwischen zwei der Riemen verlaufen, wobei die Stäbe jeweils mit ihren Stabenden von mit dem jeweiligen Riemen verbundenen Befestigungsstücken gehalten sind. Die Befestigungsstücke weisen dabei einen in eine Längsrichtung ausgedehnten Auflagebereich auf, über den das jeweilige Befestigungsstück an dem jeweiligen Riemen des Stabbandes befestigt ist. In dem Auflagebereich ist dazu mindestens eine Lochung vorgesehen, in die ein Befestigungsmittel, z.B. ein Niet, ragt, der auch die Riemen durchstößt. Der Auflagebereich kann dabei im Bereich der Lochung in Querrichtung verbreitert sein. Dadurch wird sichergestellt, dass der Auflagebereich im Bereich der Lochung nicht geschwächt wird, wodurch ein nahezu konstantes Flächenträgheitsmoment über den Auflagebereich erhalten werden kann.

Die Stäbe werden an einem Zwischenbereich gehalten, der einstückig mit dem Auflagebereich des jeweiligen Befestigungsstückes verbunden ist. An einem Zwischenbereich können dabei ein Stab oder auch zwei, drei oder mehrere Stäbe gehalten sein, wodurch eine Stabteilung zwischen den Stäben des Stabbandes eingestellt werden kann, die kleiner ist als eine Nockenteilung zwischen unterseitigen Nocken und/oder oberseitigen Nocken an dem jeweiligen Riemen.

Erfindungsgemäß ist vorgesehen, dass zwei der Befestigungsstücke mit ihren Auflagebereichen übereinanderliegend so auf einem inneren Riemen des Stabbandes positioniert und befestigt sind, dass die jeweiligen Zwischenbereiche an den beiden übereinanderliegenden Auflagebereichen zu unterschiedlichen Riemenaußenseiten des inneren Riemens weisen und sich die davon gehaltenen Stäbe daher ausgehend von dem inneren Riemen in entgegengesetzte Richtungen erstrecken. Als innerer Riemen wird dabei jeder Riemen des Stabbandes verstanden, der zwischen den beiden äußeren Riemen liegt. Ein Stabband kann also auch mehr als nur einen inneren Riemen haben, wenn mehr als drei parallel zueinander verlaufende Riemen vorgesehen sind.

Es wird also eine Mittelriemenbefestigung der jeweiligen Stäbe bereitgestellt, wobei die Stäbe selbst mit ihren Stabenden nicht unmittelbar an dem inneren Riemen befestigt sind, sondern über die Befestigungsstücke. Daher sind die Stäbe endseitig nicht zu bearbeiten oder umzuformen. Es kann also auf einen Heißprozess des Schmiedens der Stabenden verzichtet werden, was den Herstellungsprozess vereinfacht. Zudem ist die Befestigung der Stäbe am inneren Riemen über die Befestigungsstücke robuster und flexibler.

Durch die erfindungsgemäße übereinandergelegte Anordnung der Befestigungsstücke und den einstückig damit hergestellten Zwischenbereichen wird weiterhin erreicht, dass sich zumindest bis in den Übergangsbereich zu den Stäben ein nahezu konstantes Flächenträgheitsmoment einstellt, was die Robustheit und die Stabilität im Bereich des inneren Riemens des Stabbandes während des Betriebes erhöht. Zudem ist auch die Fertigung der Befestigungsstücke vereinfacht, da diese jeweils mit nur einem Zwischenbereich zur Aufnahme der jeweiligen Stäbe zu fertigen sind.

Vorzugsweise ist weiterhin vorgesehen, dass Längsachsen der direkt und/oder über die jeweilige Buchse an dem jeweiligen Zwischenbereich gehaltenen Stäbe unterhalb des Auflagebereiches des jeweiligen Befestigungsstückes sowie unterhalb einer Riemenoberseite des Riemens verlaufen, wobei die Längsachsen der jeweils gehaltenen Stäbe vorzugsweise in der Ebene einer neutralen Faser des inneren Riemens oder oberhalb oder unterhalb der Ebene der neutralen Faser des inneren Riemens verlaufen, insbesondere in einem Bereich von +/- 2mm um die neutrale Faser.

Durch das Verschieben der Stäbe in die neutrale Faser wird insbesondere die Stabilität des Stabbandes insgesamt erhöht, da Torsionsmomente auf die Stabenden bzw. deren Vernietung vermieden wird. Zudem kann die exakte Stabteilung und somit die beabsichtigte Siebwirkung über die gesamte Bandlänge, insbesondere auch an den Umlenkstellen, sicher eingehalten sowie ein Einklemmen von Pflanzenmaterial oder Fremdkörpern verhindert werden. Da eine Abwinkelung nach unten hin erfolgt, wird zudem eine optimierte Siebfläche zwischen den Riemen geschaffen, wobei die Zwischenbereiche an den Befestigungsstücken zusammen mit dem inneren Riemen als seitliche Begrenzungen für das transportierte Gut wirken können.

Vorzugsweise ist weiterhin vorgesehen, dass die Zwischenbereiche der beiden übereinanderliegenden Befestigungsstücke derartig am jeweiligen Auflagebereich angeordnet sind, dass zumindest zwei der davon gehaltenen und sich in entgegengesetzte Richtungen erstreckenden Stäbe in etwa miteinander fluchten, wobei die Längsachsen der sich in entgegengesetzte Richtungen erstreckenden Stäbe maximal 3mm voneinander abweichen, um auch Toleranzen berücksichtigen zu können. Somit wird für beide Seiten des mittleren Riemens eine in etwa identische Einbaulage erreicht, um eine sichere Umlenkung des Stabbandes und auch eine gleichmäßige Siebwirkung über das gesamte Stabband zu erreichen.

Vorzugsweise berühren sich zugekehrte Flächen der beiden übereinanderliegenden Auflagebereiche, insbesondere passgenau, so dass jegliche Relativbewegungen der beiden Befestigungsstücke im Betrieb des Stabbandes vermieden werden können. Dies kann durch unterschiedliche Maßnahmen erreicht werden, wobei vorgesehen sein kann, dass
- die zugekehrten Flächen der übereinanderliegenden Auflagebereiche komplementär zueinander gewölbt sind, vorzugsweise quer zu der Längsrichtung gewölbt sind, und/oder
- an den zugekehrten Flächen eine Nut-Stift-Kombination ausgebildet ist, um Kraftspitzen abzufangen, und/oder
- sich die zugekehrten Flächen der übereinanderliegenden Auflagebereiche komplementär zueinander in Längsrichtung konisch verjüngen und/oder
- die zugekehrten Flächen der übereinanderliegenden Auflagebereiche komplementär zueinander in Längsrichtung abgestuft sind.

Die Befestigung der jeweiligen Stäbe am Zwischenbereich kann dabei derartig erfolgen, dass das Stabende des jeweiligen Stabes axial und/oder verdrehfest am Zwischenbereich festgelegt ist, beispielsweise durch eine Nietverbindung, und/oder dadurch, dass von dem Zwischenbereich ein Befestigungsbereich in die Längsrichtung abragt, wobei der Befestigungsbereich durch mindestens eine Buchse mit einer in die Längsrichtung über eine Einstecktiefe ausgedehnten Einstecköffnung ausgebildet ist, in die das Stabende des Stabes eingesteckt ist. Somit kann eine unmittelbare Verbindung mit dem Zwischenbereich durch eine einfache Nietverbindung erfolgen, wobei bei einer Ausführung mit einer Buchse (zusätzlich oder stattdessen) den Vorteil hat, dass erhöhte Temperaturen abgefangen werden können und Biegemomente um die Querachse bzw. die Längsrichtung und Scherkräfte effektiv abgefangen werden können.

Vorzugsweise ist weiterhin vorgesehen, dass das jeweilige Befestigungsstück teilweise oder vollständig in einem subtraktiven oder additiven Fertigungsverfahren hergestellt ist, vorzugsweise unter Verwendung eines metallischen Werkstoffes oder eines thermoplastischen oder duroplastischen Polymers, beispielsweise in einem Fräsverfahren oder 3D-Druckverfahren, oder als ein Gussteil aus einem metallischen Werkstoff oder aus einem thermoplastischen oder einem duroplastischen Polymer ausgebildet ist. Demnach ist eine Fertigung mit geringem Aufwand und Energiekosten möglich. Es ist aber auch eine Ausbildung als einteiliges Gussteil möglich, so dass auf weitere Fertigungsschritte verzichtet werden kann. Alternativ kann auch ein zusätzlicher Umformvorgang vorgesehen sein, beispielsweise um den Zwischenbereich abzuwinkeln und/oder die Buchsen in die gewünschte Ebene relativ zum Riemen zu bringen. Damit kann mithilfe der Erfindung von dem Heißprozess des Schmiedens der Stabenden, wie im Stand der Technik gezeigt, hin zu einem weniger aufwändigen, weniger energieintensiven Montageprozess gewechselt werden.

Die Erfindung wird nachstehend anhand von Ausführungsbeispielen näher erläutert. Es zeigen:
- Fig. 1, 2: Stabbänder mit mehreren quer zur Laufrichtung ausgedehnten Stäben;
- Fig. 3: eine schematische Ansicht einer Stabanordnung mit einem Befestigungsstück;
- Fig. 4: eine erste Ausführung des Befestigungsstückes zur Aufnahme von drei Stäben;
- Fig. 5: eine zweite Ausführung des Befestigungsstückes zur Aufnahme von drei Stäben;
- Fig. 6: eine dritte Ausführung des Befestigungsstückes zur Aufnahme eines Stabes;
- Fig. 7A-7E: weitere Ausführungen des Übergangs zwischen einem Stabende des Stabes und dem Befestigungsstück;
- Fig. 8A, 8B: Befestigungsstücke für unterschiedliche Einbaulagen der Stäbe gemäß einer ersten Variante;
- Fig. 9A, 9B, 9C: Befestigungsstücke für unterschiedliche Einbaulagen der Stäbe gemäß einer zweiten Variante;
- Fig. 10: Befestigungsstücke an einem inneren Riemen des Stabbandes;
- Fig. 10A, 10B, 10C: unterschiedliche Ausführungen der Befestigungsstücke gemäß Fig. 10; und
- Fig. 11, 11A, 11B: weitere Varianten der Befestigungsstücke an einem inneren Riemen des Stabbandes.

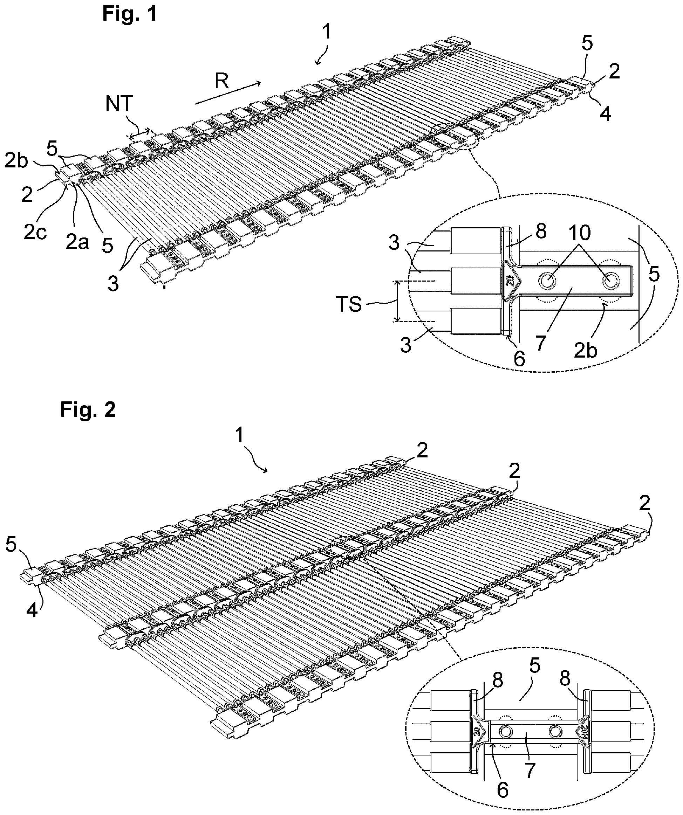

In Figur 1 ist ein Stabband 1 aus zwei parallel zueinander verlaufenden gewebelagenverstärkten (äußeren) Riemen 2 dargestellt, zwischen denen mehrere Stäbe 3 verlaufen. In Figur 2 ist eine Ausführung des Stabbandes 1 gezeigt, bei dem zusätzlich im mittleren Bereich des Stabbandes 1 ein mittlerer bzw. innerer Riemen 2 verläuft. Die Riemen 2 sind jeweils als Nockenriemen mit mehreren unterseitigen Nocken 4 und diametral gegenüberliegenden oberseitigen Nocken 5 ausgeführt, die jeweils in einer festgelegten Nockenteilung TN voneinander beabstandet sind.

Die unterseitigen Nocken 4 dienen dem Antrieb des Stabbandes 1 in eine Laufrichtung R. Dazu greifen nicht dargestellte Antriebsmittel von Antriebsrädern in die Lücken zwischen den unterseitigen Nocken 4 ein. Die oberseitigen Nocken 5 dienen dem Schutz der auf den Riemen 2 befestigten Befestigungsstücke 6, die in einem flachen, vorzugsweise quaderförmigen Auflagebereich 7 mit einer Auflageseite 7a an einer Riemenoberseite 2b zwischen den oberseitigen Nocken 5 anliegen. Derartige Ausführungen von Stabbändern 1 sind aus dem Stand der Technik bekannt und müssen daher nicht näher erläutert werden.

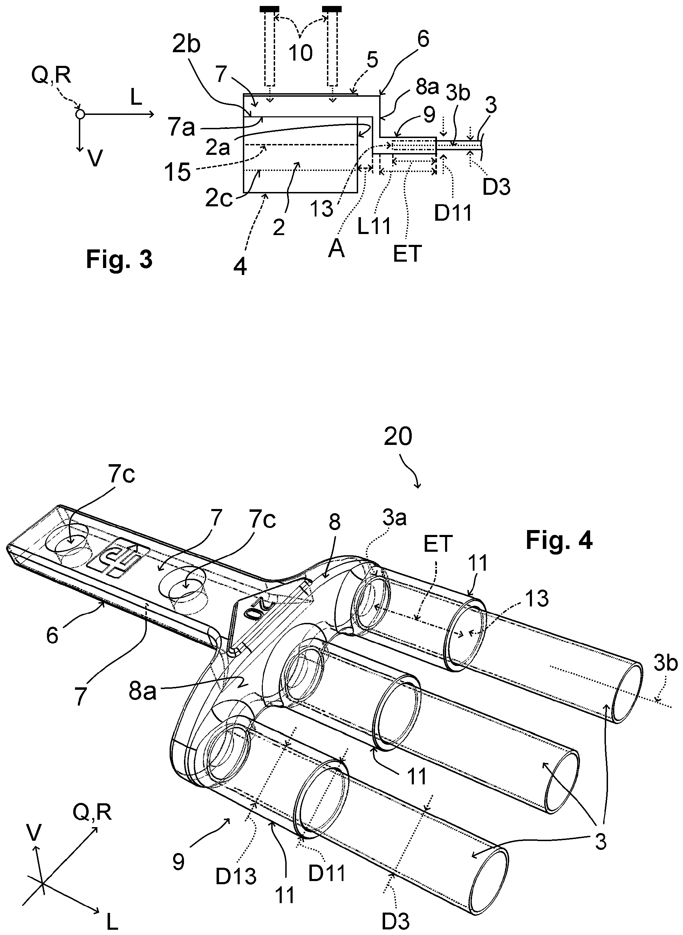

Für eine Befestigung der einzelnen Stäbe 3 auf den jeweiligen Riemen 2 sind die Befestigungsstücke 6 vorgesehen, die wie in Fig. 3 schematisch dargestellt einen in eine Längsrichtung L (bezüglich des Befestigungsstückes 6 oder der Stäbe 3) ausgedehnten Auflagebereich 7, einen gegenüber dem Auflagebereich 7 abgewinkelten bzw. in vertikaler Richtung V verlaufenden Zwischenbereich 8 und einen Befestigungsbereich 9 aufweisen. Der Auflagebereich 7, der vorzugsweise flach ausgeführt ist, so dass dieser nicht über die oberseitigen Nocken 5 hinausragt, dient dem Auflegen und Befestigen des jeweiligen Befestigungsstückes 6 auf einer Riemenoberseite 2b des jeweiligen Riemens 2. Die Befestigung erfolgt dabei über Befestigungsmittel 10, beispielsweise Niete, oder dergleichen, die sowohl den Auflagebereich 7 durch eine Lochung 7c als auch den Riemen 2 durchsetzen oder durchstoßen. Der Auflagebereich 7 kann dabei im Bereich der Lochung 7c in Querrichtung Q bzw. Laufrichtung R verbreitert sein, wie beispielhaft in den Ausschnitten in Fig. 1 und Fig. 2 gestrichelt angedeutet. Dadurch wird erreicht, dass der Auflagebereich 7 im Bereich der Lochung 7c nicht geschwächt wird, so dass sich zumindest über den Auflagebereich 7 ein nahezu konstantes Flächenträgheitsmoment ergibt. Durch die nachfolgend beschriebene Konstruktion der Befestigungsstücke 6 kann ein solches nahezu konstantes Flächenträgheitsmoment zumindest auch bis in den Übergangsbereich zu den Stäben 3 erhalten werden.

Der Auflagebereich 7 geht einstückig in den Zwischenbereich 8 über, der in vertikaler Richtung V nach unten in Richtung einer Riemenunterseite 2c abgewinkelt ist. Der Zwischenbereich 8 ist dabei unrund ausgeführt bzw. ist er bezüglich einer Längsachse des Auflagebereiches 7 exzentrisch bzw. außermittig an diesen angeformt. Für das Befestigungsstück 6 an den äußeren Riemen 2 gemäß Fig. 1 oder 2 geht der Auflagebereich 7 nur an einer Seite in den Zwischenbereich 8 über, da nur eine einseitige Befestigung der Stäbe 3 vorgesehen ist. Für das Befestigungsstück 6 an dem inneren Riemen 2 gemäß Fig. 2 ist gemäß dieser Ausführung an beiden Seiten des Auflagebereiches 7 ein einstückig damit verbundener Zwischenbereich 8 vorgesehen.

Der jeweilige Zwischenbereich 8 verläuft in vertikaler Richtung V im Wesentlichen senkrecht zum Auflagebereich 7, so dass er parallel zu einer Riemenaußenseite 2a ausgerichtet ist. Eine Seitenfläche 8a des Zwischenbereiches 8 zeigt ausgehend von dem Auflagebereich 7 durchgängig in die Längsrichtung L bzw. verläuft diese Seitenfläche 8a im Wesentlichen senkrecht zur Längsrichtung L. Die Seitenfläche 8a wird dabei als im Wesentlichen eben angenommen.

Ein Abstand A zwischen dem Zwischenbereich 8 und der Riemenaußenseite 2a ist dabei vorzugsweise kleiner als 10mm, wodurch die Siebfläche auf dem Stabband 1 optimiert werden kann. Der Zwischenbereich 8 kann beispielsweise auch direkt an der Riemenaußenseite 2a anliegen (A ≈ 0), um die Siebfläche zu maximieren. Je nach Anzahl von Stäben 3 pro Befestigungsstück 6 erstreckt sich der jeweilige Zwischenbereich 8 mit seiner Seitenfläche 8a zudem leistenartig quer zum Auflagebereich 7 bzw. zu den Stäben 3, d.h. in eine Querrichtung Q bzw. in die Laufrichtung R des jeweiligen Riemens 2.

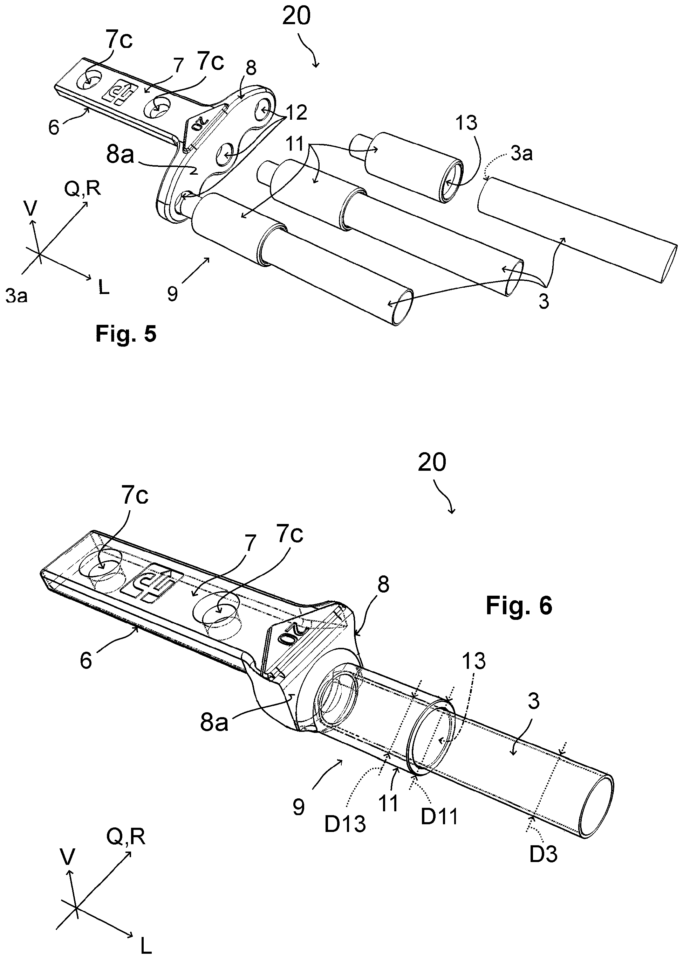

Der sich daran anschließende Befestigungsbereich 9 kann unterschiedliche Ausführungen haben. Wie in Fig. 4 und 5 dargestellt, wird der Befestigungsbereich 9 durch mehrere zylinderförmige Hülsen oder Buchsen 11 gebildet, die jeweils mit dem Zwischenbereich 8 verbunden sind. Die Buchsen 11 ragen dabei senkrecht von der Seitenfläche 8a in die Längsrichtung L ab. Die Buchsen 11 und der flache Auflagebereich 7 verlaufen also parallel zueinander in die Längsrichtung L und ragen in entgegengesetzte Richtungen von dem Zwischenbereich 8 ab.

Die Buchsen 11 sind vorzugsweise einstückig mit dem Zwischenbereich 8 und dem Auflagebereich 7 gefertigt, so dass insgesamt ein einstückiges Befestigungsstück 6 bereitgestellt wird. Das Befestigungsstück 6 kann dazu beispielsweise in einem subtraktiven oder additiven Fertigungsverfahren geformt werden, beispielsweise in einem Fräsverfahren oder 3D-Druckverfahren oder dergleichen, unter Verwendung von metallischen Werkstoffen oder thermoplastischen oder duroplastischen Polymeren. Weiterhin kann ein Gussverfahren mit denselben Materialien vorgesehen sein, um das Befestigungsstück 6 als metallisches Gussteil bereitzustellen. Bei dieser Ausführung ist nur ein Herstellungsvorgang nötig, was die Herstellung insgesamt vereinfacht. Zudem kann auf den Heißprozess des Schmiedens der Stabenden verzichtet werden und stattdessen auf einen insgesamt weniger aufwändigen, weniger energieintensiven Montageprozess zurückgegriffen werden.

Die Buchsen 11 können aber wie in Fig. 5 in einer Explosionsdarstellung dargestellt auch in Löcher 12 im Zwischenbereich 8 eingesteckt bzw. eingebracht und nachträglich in einem weiteren Verbindungsvorgang mit dem Zwischenbereich 8 verbunden werden, beispielsweise in einem Nietvorgang, Schraubvorgang, Klebevorgang, Schweißvorgang, Lötvorgang, etc. Es kann also auch eine stoffschlüssige und/oder kraftschlüssige und/oder formschlüssige Verbindung zwischen dem Zwischenbereich 8 und den Buchsen 11 vorgesehen sein. In dem Fall ist lediglich der Auflagebereich 7 mit dem Zwischenbereich 8 in einem der o.g. Fertigungsverfahren einstückig gefertigt.

Der Befestigungsbereich 9 mit den Buchsen 11 dient der Aufnahme eines oder mehrerer Stäbe 3, je nachdem, wie viele Stäbe 3 je Befestigungsstück 6 gehalten werden sollen, was abhängig von der Verwendung des Stabbandes 1 ist. Demnach können Stabanordnungen 20 mit lediglich einem Stab 3 (Single Rod, vgl. Fig. 6), zwei Stäben 3 (Twin-Rod, nicht dargestellt), drei Stäben 3 (Triple-Rod, vgl. Fig. 1-5) oder auch mehr als drei Stäben 3 pro Befestigungsstück 6 vorgesehen sein, wobei jeder Stab 3 über eine einzelne Buchse 11 am Zwischenbereich 8 des Befestigungsstückes 6 gehalten wird und ausgehend davon in die Längsrichtung L verläuft. Es kann aber auch vorgesehen sein, dass mehrere solcher Buchsen 11 zu einer Gesamtbuchse zusammengefasst sind (nicht dargestellt) und die Gesamtbuchse am Zwischenbereich 8 befestigt ist. In dieser Gesamtbuchse können dann in Querrichtung Q voneinander beabstandet mehrere Stäbe 3 aufgenommen werden (jeweils über in Querrichtung Q voneinander beabstandete Einstecköffnungen 13).

Der Zwischenbereich 8, der den Übergang zwischen dem Auflagebereich 7 und dem Befestigungsbereich 9 bildet, ist bei zwei oder mehreren Stäben 3 mit seiner Seitenfläche 8a in die Querrichtung Q bzw. in die Laufrichtung R des Riemens 2 über einen größeren Bereich plattenartig oder leistenartig ausgedehnt, um in Querrichtung Q mehrere Buchsen 11 nebeneinander und beabstandet voneinander (oder eine größere Gesamtbuchse) halten zu können. Bei nur einem Stab 3 hingegen weist der Zwischenbereich 8 mit seiner Seitenfläche 8a eine Ausdehnung in Querrichtung Q auf, die beispielsweise in etwa einem Buchsen-Durchmesser D11 (Außendurchmesser) der Buchse 11 entspricht (oder etwas breiter), wie in Fig. 6 beispielhaft dargestellt.

Daraus folgt, dass über die konstruktive Ausführung des leistenartigen Zwischenbereiches 8 und des Befestigungsbereiches 9 eine Stabteilung TS festgelegt werden kann. Bei der Aufnahme von zwei oder mehreren Stäben 3 über ein solches Befestigungsstück 6 kann eine Stabteilung TS zwischen den einzelnen Stäben 3 erreicht werden, die kleiner ist als die Nockenteilung TN zwischen den einzelnen oberseitigen (und unterseitigen) Nocken 4, 5 (vgl. Fig. 1, 2). Bei nur einem Stab 3 je Befestigungsstück 6 entspricht die Stabteilung TS hingegen der Nockenteilung TN des Riemens 2.

Durch die Verwendung einer Buchse 11 im Befestigungsbereich 9 kann der Übergang zu den Stäben 3 optimiert werden, woraus sich je nach Ausführung der Stäbe 3 und der Buchsen 11 mehrere Vorteile ergeben:
Zum einen kann die Befestigung der Stäbe 3 optimiert werden. Eine in Längsrichtung L vom Zwischenbereich 8 abragende Buchse 11 (oder Gesamtbuchse) bietet gegenüber einer ausschließlichen Befestigung am Zwischenbereich 8 (wie im Stand der Technik) eine robustere bzw. stabilere Aufnahme und damit einen optimaleren Halt bei auftretenden Biegemomenten, insbesondere bei einer Buchsenlänge L11 von beispielsweise zwischen 5mm und 30mm, vorzugsweise 15mm. In eine solche Buchse 11 kann der Stab 3 endseitig bis zu einer Einstecktiefe ET in eine darin befindliche Einstecköffnung 13 eingesteckt werden. Die Einstecktiefe ET entspricht dabei mindestens der Hälfte, vorzugsweise mindestens zwei Drittel der Buchsenlänge L11, d.h. mindestens 2.5 mm, vorzugsweise mindestens 7.5mm oder mehr.

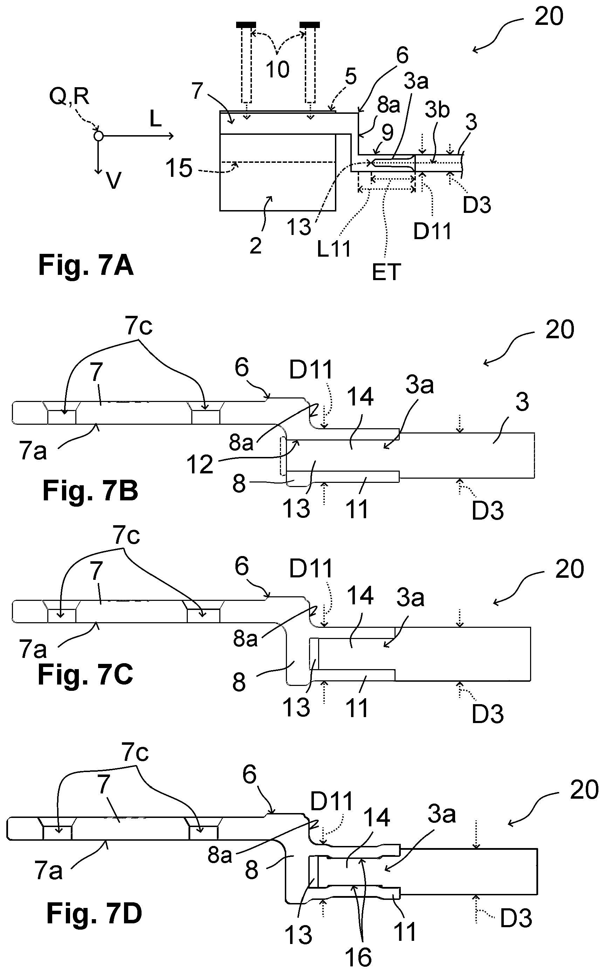

Die Stäbe 3 können dabei auch mit einer solchen Buchse 11 noch endseitig in Löcher 12 im Zwischenbereich 8 ragen und darüber zusätzlich am Zwischenbereich 8 befestigt sein, beispielsweise durch eine Nietverbindung oder dergleichen, wie in Fig. 7B gestrichelt angedeutet. Dies dient zusätzlich dazu, den jeweiligen Stab 3 axial und/oder verdrehfest am abgewinkelten Zwischenbereich 8 festzulegen. Die Buchse 11 sorgt dann ergänzend dafür, dass Biegemomente auf die Stäbe 3 effizient abgefangen und die Befestigung daher dauerhaft gesichert werden.

Vorzugsweise wird der eingesteckte Stab 3 in der Einstecköffnung 13 der Buchse 11 zusätzlich befestigt, insbesondere dann, wenn keine zusätzliche Befestigung am Zwischenbereich 8 vorgesehen ist. Die Befestigung in der Buchse 11 erfolgt beispielsweise durch Verklemmen bzw. Verpressen bzw. Krimpen, Kleben, Schweißen, oder dergleichen. Der Stab 3 kann auch eingeschraubt werden, wobei die Einstecköffnung 13 dazu ein entsprechendes Innengewinde aufweisen kann.

Weiterhin kann durch eine solche Buchse 11 der Temperaturübertrag zwischen den Stäben 3 und dem Befestigungsstück 6 oder dem Riemen 2 optimiert werden, da die Buchse 11 höhere Temperaturen effizient aufnehmen und ableiten kann, so dass sich die darin eingesteckten Stäbe 3 weniger stark erwärmen und folglich thermisch weniger beansprucht werden. Dies kann sich auf die Materialwahl der Stäbe 3 auswirken, wobei beispielsweise Glasfaser oder Kunststoff als gewichtssparendes Material verwendet werden kann. Grundsätzlich kann aber auch auf Stahl zurückgegriffen werden.

Außerdem kann durch eine solche Buchse 11 der Übergang zwischen dem Befestigungsstück 6 und dem jeweiligen Stab 3 variabler gestaltet werden, indem die Buchse 11 entsprechend an die Anwendung angepasst gefertigt wird. So kann wie oben bereits beschrieben die Einstecktiefe ET bzw. die Buchsenlänge L11 entsprechend der Anwendung vorab festgelegt werden, um eine gewünschte Stabilität oder Robustheit des Übergangs zu erhalten. Weiterhin kann auch die Form der Einstecköffnung 13 an die gewünschte Form des Stabes 3 bzw. des Stabendes 3a angepasst werden.

Im einfachsten Fall kann die Buchse 11 wie in Fig. 4, 5 oder 6 dargestellt hohlzylindrisch ausgeführt sein, so dass die Einstecköffnung 13 einen über ihre Länge gleichmäßigen Einsteck-Durchmesser D13 aufweist. Der Einsteck-Durchmesser D13 entspricht dabei in etwa dem Stab-Durchmesser D3 des Stabes 3 bzw. ist dieser nur geringfügig größer, um beim Einstecken bereits einen Reibschluss zwischen beiden zu erreichen. Der jeweilige Stab 3, der beispielsweise einen Stab-Durchmesser D3 von zwischen 5mm und 18mm aufweist, ist bei dieser Ausführung endseitig nicht mehr anzupassen, um über die Einstecköffnung 13 an der Buchse 11 befestigt zu werden, was den Herstellungsaufwand verringert.

Wie in Fig. 7A in einer Schnittansicht dargestellt, kann die Einstecköffnung 13 in der Buchse 11 aber auch eine andere Form mit einem in der Länge variierenden Einsteck-Durchmesser D13 aufweisen, beispielsweise zum Zwischenbereich 8 hin spitz zulaufend. In dieser Ausführung ist der Stab 3 an seinem Stabende 3a entsprechend komplementär dazu "anzuspitzen", so dass sich der Stab-Durchmesser D3 in dem einzusteckenden Bereich entsprechend zur Stirnseite hin verringert. Auch andere Formen der Einstecköffnung 13 und komplementäre Formen des Stabendes 3a sind möglich, beispielsweise ein zylindrischer Zapfen 14 am Stabende 3a, wie z.B. in Fig. 7B oder 7C gezeigt. Dieser zylindrische Zapfen 14 kann, wie in Fig. 7B gestrichelt angedeutet, auch bis in Löcher 12 im Zwischenbereich 8 ragen, um dann darüber endseitig eine Nietverbindung herzustellen, über die der jeweilige Stab 3 axial und verdrehsicher am abgewinkelten Zwischenbereich 8 festgelegt ist.

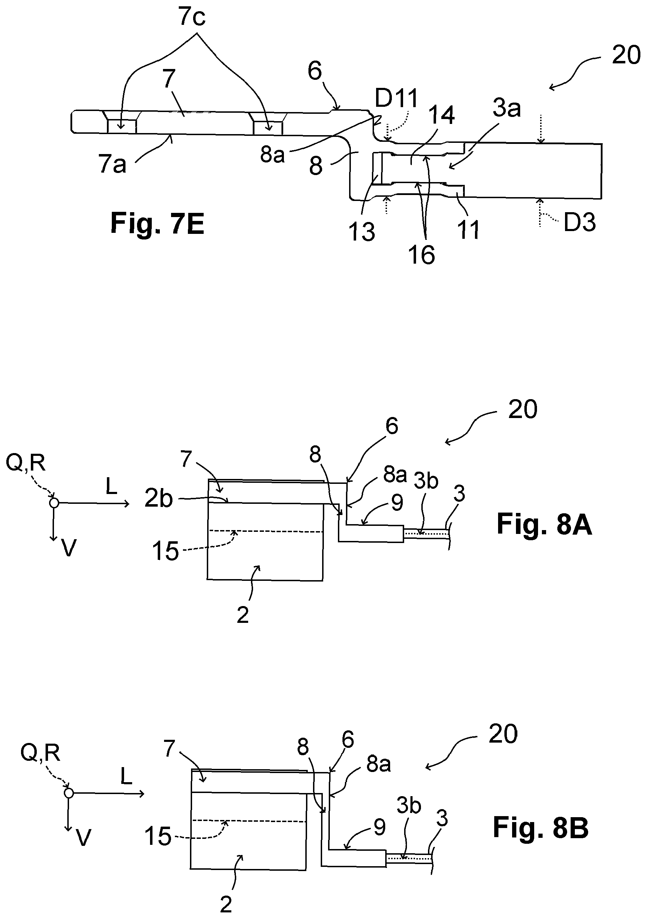

Um eine sichere Befestigung des Stabes 3 in der Buchse 11 zu ermöglichen, kann zusätzlich auch eine Vertiefung 16 in dem zylindrischen Zapfen 14 am Stabende 3a ausgebildet sein, wie in Fig. 7D und 7E dargestellt. In diese Vertiefung 16 kann die Wand der Buchse 11 durch entsprechende Verformung in Eingriff gebracht werden, um den Stab 3 in axialer Richtung und ggf. auch verdrehsicher an der Buchse 11 zu halten.

Ergänzend ist in Fig. 7A, 7C und 7E vorgesehen, dass der Buchsen-Durchmesser D11 der Buchse 11 dem Stab-Durchmesser D3 des Stabes 3 in dem Bereich außerhalb der Einstecköffnung 13 entspricht. Dadurch geht der Stab 3 direkt in die Buchse 11 über, so dass oberflächlich keine Kanten oder Absätze zwischen dem Stab 3 und dem Befestigungsstück 6 entstehen, an denen sich im Betrieb des Stabbandes 1 Schmutz o.ä. anlagern kann. Dadurch entsteht auch der Eindruck einer Einstückigkeit des Befestigungsstückes 6 mit dem jeweiligen Stab 3.

Der beschriebene Aufbau des Befestigungsstückes 6 ermöglicht weiterhin in einfacher Weise eine Festlegung der Einbaulage der Stäbe 3 bzw. der Ebene, in der die Stäbe 3 am fertigen Stabband 1 positioniert sind. Dabei ist vorgesehen, dass der Zwischenbereich 8 vom Auflagebereich 7 nach unten hin abgewinkelt ist, so dass die daran angeordneten Buchsen 11 in einer Ebene liegen, die sich unterhalb des Auflagebereiches 7 befinden, wie beispielhaft in den Fig. 8A, 8B dargestellt. Die in den Buchsen 11 aufgenommenen Stäbe 3 werden dadurch am Stabband 1 in einer Ebene positioniert, die unterhalb der Riemenoberseite 2b liegt.

Gemäß Fig. 8A verläuft der Zwischenbereich 8 in vertikaler Richtung V beispielsweise derartig weit nach unten in Richtung der Riemenunterseite 2c, dass die Buchse(n) 11 im Befestigungsbereich 9 und damit auch die Längsachsen 3b der jeweiligen Stäbe 3 in der Ebene der neutralen Faser 15 des Riemens 2 liegen. Gemäß Fig. 8B verläuft der Zwischenbereich 8 vom Auflagebereich 7 derartig in vertikaler Richtung V nach unten, dass die Buchse(n) 11 bzw. die Längsachsen 3b des oder der Stäbe 3 in einer Ebene unterhalb der neutralen Faser 15 des Riemens 2 liegen.

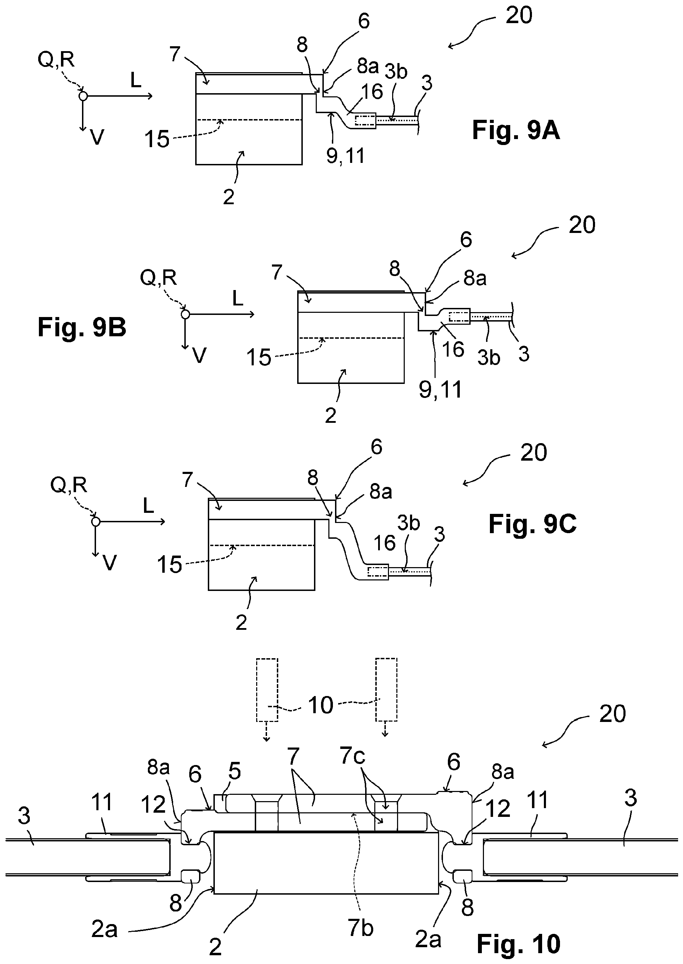

Eine andere oder weitere Möglichkeit der Festlegung der Einbaulage bzw. der Ebene der Stäbe 3 am Stabband 1 ist, die Buchse(n) 11 ausgehend von dem Zwischenbereich 8 zu verformen bzw. abzukröpfen, wie in den Figuren 9A, 9B, 9C beispielhaft dargestellt. Die Buchse 11 steht dabei auch weiterhin senkrecht in die Längsrichtung L vom Zwischenbereich 8 bzw. von der Seitenfläche 8a ab, ändert dann aber ihre Richtung, um dann endseitig wieder in die Längsrichtung L zu zeigen. Der Zwischenbereich 8 kann demnach immer identisch nach unten hin abgewinkelt sein und der Verlauf der Verformung bzw. Abkröpfung 17 wird so gewählt, dass die Längsachse 3b eines in die verformte bzw. abgekröpfte Buchse 11 eingesteckten Stabes 3 in der Ebene der neutralen Faser 15 des Riemens 2 (s. Fig. 9A) oder darüber (s. Fig. 9B) oder darunter (s. Fig. 9C) liegt. Dies kann im Übrigen auch mit einer entsprechend angepassten Ausdehnung und Positionierung des Zwischenbereiches 8, beispielsweise gemäß den Ausführungen der Figuren 8A, 8B, kombiniert werden.

Die Ausführungen in den Fig. 8A, 8B und 9A, 9B, 9C haben dabei den Vorteil, dass für jede Einbaulage immer derselbe Stab 3 verwendet werden kann und daher keine Anpassung oder Verformung des Stabes 3 selbst nötig ist. Dadurch wird der Herstellungsaufwand verringert, da sich das Befestigungsstück 6 in der Regel einfacher fertigen lässt als die Stäbe 3. Grundsätzlich kann jedoch auch ein verformter bzw. abgekröpfter Stab 3 verwendet werden, um die jeweilige Einbaulage am Stabband 1 festzulegen.

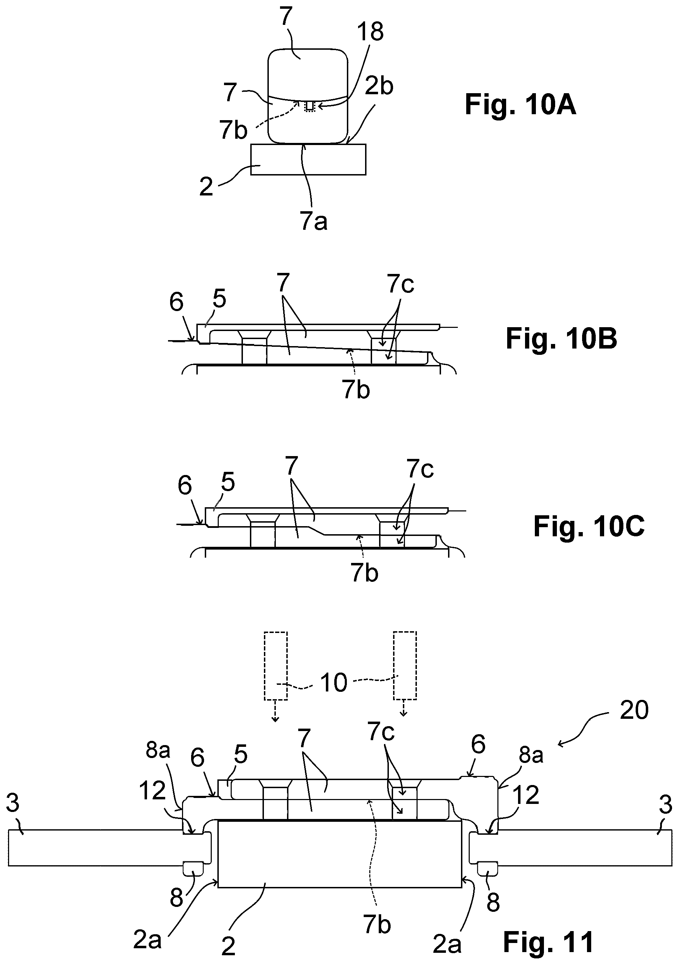

Gemäß Fig. 10 ist eine weitere Ausführung für die Befestigung der Stäbe 3 an einem inneren Riemen 2 dargestellt. In der vorab bereits beschriebenen Fig. 2 ist vorgesehen, dass der Auflagebereich 7 zu beiden Riemenaußenseiten 2a des inneren Riemens 2 hin einstückig in einen Zwischenbereich 8 übergeht. Dadurch können die Stäbe 3 über die Buchsen 11 beidseitig des inneren Riemens 2 in der jeweiligen Einbaulage sicher gehalten werden, wobei im Bereich des inneren Riemens 2 normalerweise höhere Biegemomente wirken, die über die Buchsen 11 entsprechend abgefangen werden. Bei dieser Variante der Befestigungsstücke 6 kommen die oben genannten konstruktiven Ausführungen ebenfalls zur Anwendung.

In der abgewandelten Ausführung gemäß Fig. 10 werden die Auflagebereiche 7 zweier Befestigungsstücke 6, die jeweils nur einen Zwischenbereich 8 aufweisen, um die Hochachse verdreht zueinander übereinandergelegt und gemeinsam durch entsprechende Befestigungsmittel 10, beispielsweise Niete, oder dergleichen, am inneren Riemen 2 befestigt. Die Befestigungsmittel 10 durchsetzen oder durchstoßen dabei die beiden gelochten Auflagebereiche 7 und auch den inneren Riemen 2.

Die beiden Befestigungsstücke 6 werden dabei derartig übereinandergelegt, dass sich parallel zu jeder Riemenaußenseite 2a des inneren Riemens 2 ein Zwischenbereich 8 befindet, über die beidseitig des inneren Riemens 2 die Stäbe 3 über die Buchsen 11 befestigt werden können. Es werden also zwei der oben beschriebenen Befestigungsstücke 6 miteinander kombiniert. Um eine in etwa identische Einbaulage der Stäbe 3 zu beiden Seiten des inneren Riemens 2 bzw. in etwa miteinander fluchtende Längsachsen 3b der Stäbe 3 zu erhalten, weist der Zwischenbereich 8 mit den Seitenflächen 8a des obenliegenden Befestigungsstückes 6 eine größere Ausdehnung in vertikaler Richtung V auf als der Zwischenbereich 8 des untenliegenden Befestigungsstücks 6. Das obenliegende Befestigungsstück 6 ist nämlich in vertikaler Richtung V um die Dicke des Auflagebereiches 7 des untenliegenden Befestigungsstückes 6 nach oben versetzt, was durch eine entsprechend größere vertikale Ausdehnung des Zwischenbereiches 8 bzw. der Seitenfläche 8a des obenliegenden Befestigungsstückes 6 idealerweise kompensiert wird. Dabei können Toleranzen von beispielsweise bis zu 3mm zwischen den Längsachsen 3b der entgegengesetzt ausgerichteten Stäbe 3 zugelassen werden.

Um eine Relativbewegung der beiden übereinanderliegenden Befestigungsstücke 6 in die Laufrichtung R des Riemens 2 und/oder in die Längsrichtung L der Befestigungsstücke 6 bzw. Stäbe 3 zu vermeiden, sind die einander zugekehrten Flächen 7b der beiden Auflagebereiche 7 nicht-planar ausgeführt. So können die einander zugekehrten Flächen 7b der beiden Auflagebereiche 7 beispielsweise wie in Fig. 10A in einer Schnittansicht dargestellt in die Laufrichtung L des Riemens 2 komplementär zueinander (konkav/konvex) gewölbt und/oder wie in Fig. 10B dargestellt in Längsrichtung L konisch verjüngt oder wie in Fig. 10C dargestellt abgestuft sein. Ergänzend können über eine Nut-Stift-Kombination 18, die stellvertretend lediglich in Fig. 10A eingezeichnet ist, Kraftspitzen abgefangen werden.

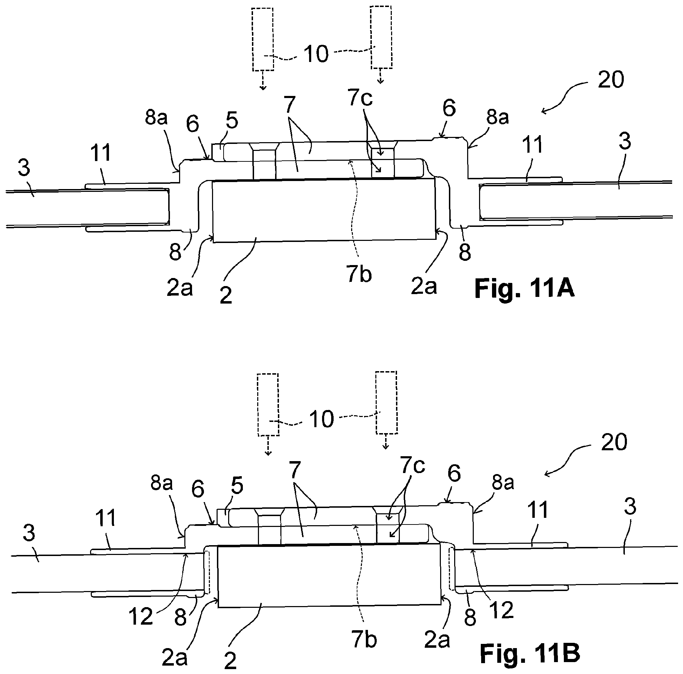

Die in Fig. 10, 10A, 10B, 10C dargestellten Ausführungen können auch für einstückig mit dem Zwischenbereich 8 gefertigten Buchsen 11 (s. Fig. 11A), an den Zwischenbereich 8 angenietete Stabenden 3b (s. Fig. 11B) und auch für andere Formen der Stabenden 3a und der Buchsen 11 zur Anwendung kommen. Die oben genannten Varianten sind demnach auch auf diese übereinanderliegende Ausführung anwendbar.

Diese Art der Befestigung von Stäben 3 an einem inneren Riemen 2 ist auch für Befestigungsstücke 6 denkbar, die gegenüber der bisher beschriebenen Ausführung keine Buchse 11 aufweisen. Die Stäbe sind demnach wie in Fig. 11 dargestellt direkt an dem mit dem Auflagebereich 7 einstückig gefertigten Zwischenbereich 8 festgelegt, beispielsweise durch eine endseitige Nietverbindung. Auch für eine derartige Variante können die Befestigungsstücke 6 entsprechend verdreht zueinander und ggf. kombiniert mit den vorher beschriebenen Ausführungen aus den Fig. 10A, 10B, 10C, übereinandergelegt und zusammen über entsprechende Befestigungsmittel 10 am inneren Riemen 2 befestigt werden.

### Bezugszeichenliste

- 1: Stabband
- 2: Riemen
- 2a: Riemenaußenseite
- 2b: Riemenoberseite
- 2c: Riemenunterseite
- 3: Stab
- 3a: Stabende
- 3b: Längsachse des Stabes 3
- 4: unterseitiger Nocken
- 5: oberseitiger Nocken
- 6: Befestigungsstück
- 7: Auflagebereich
- 7a: Auflageseite
- 7b: zugekehrte Flächen
- 7c: Lochung
- 8: Zwischenbereich
- 8a: Seitenfläche
- 9: Befestigungsbereich
- 10: Befestigungsmittel
- 11: Buchse
- 12: Löcher
- 13: Einstecköffnung
- 14: zylindrischer Zapfen
- 15: neutrale Faser des Riemens 2
- 16: Vertiefung
- 17: Abkröpfung
- 18: Nut-Stift-Kombination
- 20: Stabanordnung
- A: Abstand
- D3: Stab-Durchmesser
- D11: Buchsen-Durchmesser
- D13: Einsteck-Durchmesser
- ET: Einsteck-Tiefe
- L: Längsrichtung
- L11: Buchsenlänge
- Q: Querrichtung
- R: Laufrichtung
- TN: Nockenteilung
- TS: Stabteilung
- V: vertikale Richtung

## Patentansprüche

1. Stabband (1) für landwirtschaftliche Maschinen mit
- mindestens drei parallel zueinander verlaufenden, zugfesten und elastischen endlosen Riemen (2), die in einer Laufrichtung (R) ausgedehnt sind und jeweils eine Riemenoberseite (2b) und eine Riemenunterseite (2c) aufweisen, wobei zwischen zwei außen liegenden Riemen (2) ein innerer Riemen (2) verläuft,
- Befestigungsstücken (6), die mit den Riemen (2) verbunden sind, und
- quer zu der Laufrichtung (R) und parallel zueinander angeordneten Stäben (3), die jeweils zwischen zwei der Riemen (2) verlaufen,
**dadurch gekennzeichnet, dass**
die Stäbe (3) jeweils mit ihren Stabenden (3a) von mit dem jeweiligen Riemen (2) verbundenen Befestigungsstücken (6) gehalten sind, wobei die Stäbe (3) selbst mit ihren Stabenden (3a) nicht unmittelbar an dem inneren Riemen (2) befestigt sind, sondern über die Befestigungsstücke (6) an dem inneren Riemen (2) befestigt sind
wobei das jeweilige Befestigungsstück (6) mindestens aufweist:
- einen in eine Längsrichtung (L) ausgedehnten Auflagebereich (7), über den das Befestigungsstück (6) an dem jeweiligen Riemen (2) des Stabbandes (1) befestigt ist, und
- einen einstückig mit dem Auflagebereich (7) gefertigten Zwischenbereich (8), an dem mindestens ein Stab (3) über sein Stabende (3a) direkt und/oder über eine zusätzliche Buchse (11) gehalten ist,
wobei zwei der Befestigungsstücke (6) mit ihren Auflagebereichen (7) übereinanderliegend so auf dem inneren Riemen (2) des Stabbandes (1) befestigt sind, dass die Zwischenbereiche (8) an den beiden übereinanderliegenden Auflagebereichen (7) benachbart zu unterschiedlichen Riemenaußenseiten (2a) des inneren Riemens (2) liegen und sich die davon gehaltenen Stäbe (3) ausgehend von dem inneren Riemen (2) in entgegengesetzte Richtungen erstrecken.

2. Stabband (1) nach Anspruch 1, **dadurch gekennzeichnet, dass** die Zwischenbereiche (8) der beiden übereinanderliegenden Befestigungsstücke (6) vorzugsweise unrund ausgeführt sind und/oder exzentrisch an den jeweiligen Auflagebereich (7) angeformt sind und ausgehend von den jeweiligen Auflagebereichen (7), mit denen sie einstückig verbunden sind, in vertikaler Richtung (V) nach unten in Richtung der Riemenunterseite (2c) abgewinkelt sind, vorzugsweise senkrecht.

3. Stabband (1) nach Anspruch 2, **dadurch gekennzeichnet, dass** Längsachsen (3b) der direkt und/oder über die jeweilige Buchse (11) an dem jeweiligen Zwischenbereich (8) gehaltenen Stäbe (3) von der Riemenoberseite (2b) aus gesehen in vertikaler Richtung (V) unterhalb des Auflagebereiches (7) des jeweiligen Befestigungsstückes (6) sowie in vertikaler Richtung (V) unterhalb der Riemenoberseite (2b) des Riemens (2) verlaufen, wobei die Längsachsen (3b) der jeweils gehaltenen Stäbe (3) vorzugsweise in der Ebene einer neutralen Faser (15) des inneren Riemens (2) oder oberhalb in vertikaler Richtung (V) in Richtung der Riemenoberseite (2b) oder unterhalb in vertikaler Richtung (V) in Richtung der Riemenunterseite (2c) der Ebene der neutralen Faser (15) des inneren Riemens (2) verlaufen, insbesondere in einem Bereich von +/-2mm um die neutrale Faser (15).

4. Stabband (1) nach einem der vorhergehenden Ansprüche, **dadurch gekennzeichnet, dass** die Zwischenbereiche (8) der beiden übereinanderliegenden Befestigungsstücke (6) derartig am jeweiligen Auflagebereich (7) angeordnet sind, dass zumindest zwei der davon gehaltenen und sich in entgegengesetzte Richtungen erstreckenden Stäbe (3) in etwa miteinander fluchten, wobei die Längsachsen (3b) der sich in entgegengesetzte Richtungen erstreckenden Stäbe (3) maximal 3mm voneinander abweichen.

5. Stabband (1) nach einem der vorhergehenden Ansprüche, **dadurch gekennzeichnet, dass** sich zugekehrte Flächen (7b) der beiden übereinanderliegenden Auflagebereiche (7) berühren, vorzugsweise passgenau berühren.

6. Stabband (1) nach Anspruch 5, **dadurch gekennzeichnet, dass** die zugekehrten Flächen (7b) der übereinanderliegenden Auflagebereiche (7) komplementär zueinander gewölbt sind, vorzugsweise quer zu der Längsrichtung (L) gewölbt sind.

7. Stabband (1) nach Anspruch 5 oder 6, **dadurch gekennzeichnet, dass** an den zugekehrten Flächen (7b) eine Nut-Stift-Kombination (18) ausgebildet ist.

8. Stabband (1) nach einem der Ansprüche 5 bis 7, **dadurch gekennzeichnet, dass** sich die zugekehrten Flächen (7b) der übereinanderliegenden Auflagebereiche (7) komplementär zueinander in Längsrichtung (L) konisch verjüngen.

9. Stabband (1) nach einem der Ansprüche 5 bis 8, **dadurch gekennzeichnet, dass** die zugekehrten Flächen (7b) der übereinanderliegenden Auflagebereiche (7) komplementär zueinander in Längsrichtung (L) abgestuft sind.

10. Stabband (1) nach einem der vorhergehenden Ansprüche, **dadurch gekennzeichnet, dass** die übereinanderliegenden Auflagebereiche (7) der beiden Befestigungsstücke (6) zwischen zwei von der Riemenoberseite (2b) in vertikaler Richtung (V) abstehenden oberseitigen Nocken (5) des inneren Riemens (2) angeordnet sind und durch Befestigungsmittel (10), beispielsweise Niete, die die beiden übereinanderliegenden Auflagebereiche (7) und den inneren Riemen (2) durchsetzen, am inneren Riemen (2) befestigt ist.

11. Stabband (1) nach einem der vorhergehenden Ansprüche, **dadurch gekennzeichnet, dass** ein Abstand (A) zwischen der jeweiligen Riemenaußenseite (2a) des inneren Riemens (2) und zumindest einem Zwischenbereich (8) der beiden übereinanderliegenden Befestigungsstücke (6) maximal 10mm beträgt oder zumindest ein Zwischenbereich (8) der beiden übereinanderliegenden Befestigungsstücke (6) die jeweilige Riemenaußenseite (2a) berührt.

12. Stabband (1) nach einem der vorhergehenden Ansprüche, **dadurch gekennzeichnet, dass** das Stabende (3a) des jeweiligen Stabes (3) axial und/oder verdrehfest am Zwischenbereich (8) festgelegt ist, beispielsweise durch eine Nietverbindung.

13. Stabband (1) nach einem der vorhergehenden Ansprüche, **dadurch gekennzeichnet, dass** von dem Zwischenbereich (8) ein Befestigungsbereich (9) in die Längsrichtung (L) abragt, wobei der Befestigungsbereich (9) durch mindestens eine Buchse (11) mit einer in die Längsrichtung (L) über eine Einstecktiefe (ET) ausgedehnten Einstecköffnung (13) ausgebildet ist, in die das Stabende (3a) des Stabes (3) eingesteckt ist.

14. Stabband (1) nach einem der vorhergehenden Ansprüche, **dadurch gekennzeichnet, dass** an einem Befestigungsstück (6) über den jeweiligen Zwischenbereich (8) mindestens zwei Stäbe (3), vorzugsweise mindestens drei Stäbe (3), aufgenommen sind, wobei ein Abstand zwischen den aufgenommenen Stäben (3) in Abhängigkeit einer vorgesehenen Stabteilung (TS) zwischen den Stäben (3) am Stabband (1) gewählt ist, wobei die Stabteilung (TS) kleiner ist als eine Nockenteilung (TN) zwischen unterseitigen Nocken (4) und/oder oberseitigen Nocken (5) an dem jeweiligen Riemen (2).

15. Stabband (1) nach einem der vorhergehenden Ansprüche, **dadurch gekennzeichnet, dass** das jeweilige Befestigungsstück (6) teilweise oder vollständig in einem subtraktiven oder additiven Fertigungsverfahren hergestellt ist, vorzugsweise unter Verwendung eines metallischen Werkstoffes oder eines thermoplastischen oder eines duroplastischen Polymers, beispielsweise in einem Fräsverfahren oder 3D-Druckverfahren, oder als ein Gussteil ausgebildet ist, vorzugsweise aus einem metallischen Werkstoff oder aus einem thermoplastischen oder einem duroplastischen Polymer.

## Claims

1. Rod belt (1) for agricultural machines having
- at least three endless belts (2) running parallel to one another, which are tensile and elastic and are extended in a running direction (R) and each have a belt top side (2b) and a belt underside (2c), wherein an inner belt (2) runs between two outer belts (2),
- fastening elements (6) which are connected to the belts (2), and
- rods (3) arranged transversely to the running direction (R) and parallel to one another, which rods each extend between two of the belts (2), wherein the rods (3) are each held with their rod ends (3a) by fastening elements (6) connected to the respective belt (2), **characterized in that** the rods (3) themselves are not fastened with their rod ends (3a) directly to the inner belt (2), but are fastened to the inner belt (2) via the fastening elements (6),
wherein the respective fastening element (6) comprises at least:
- a support portion (7) extended in a longitudinal direction (L), via which the fastening element (6) is fastened to the respective belt (2) of the rod belt (1), and
- an intermediate portion (8) manufactured in one piece with the support portion (7), on which at least one rod (3) is held via its rod end (3a) directly and/or via an additional bushing (11),
wherein two of the fastening elements (6) are fastened on the inner belt (2) of the rod belt (1) with their support portions (7) lying one above the other such that the intermediate portions (8) on the two superposed support portions (7) are adjacent to different belt outer sides (2a) of the inner belt (2) and the rods (3) held thereby extend, starting from the inner belt (2), in opposite directions.

2. Rod belt (1) according to claim 1, **characterized in that** the intermediate portions (8) of the two superposed fastening elements (6) are preferably of non-circular configuration and/or are formed eccentrically on the respective support portion (7) and, starting from the respective support portions (7) with which they are connected in one piece, are bent downward in a vertical direction (V) in the direction of the belt underside (2c), preferably perpendicularly.

3. Rod belt (1) according to claim 2, **characterized in that** longitudinal axes (3b) of the rods (3) held on the respective intermediate portion (8) directly and/or via the respective bushing (11), as seen from the belt top side (2b), extend in the vertical direction (V) below the support portion (7) of the respective fastening element (6) and also in the vertical direction (V) below the belt top side (2b) of the belt (2), wherein the longitudinal axes (3b) of the respectively held rods (3) preferably extend in the plane of a neutral fibre (15) of the inner belt (2) or above, in the vertical direction (V) in the direction of the belt top side (2b), or below, in the vertical direction (V) in the direction of the belt underside (2c), the plane of the neutral fibre (15) of the inner belt (2), in particular in a range of +/- 2 mm around the neutral fibre (15).

4. Rod belt (1) according to one of the preceding claims, **characterized in that** the intermediate portions (8) of the two superposed fastening elements (6) are arranged on the respective support portion (7) in such a way that at least two of the rods (3) held thereby and extending in opposite directions approximately align with one another, wherein the longitudinal axes (3b) of the rods (3) extending in opposite directions deviate from one another by at most 3 mm.

5. Rod belt (1) according to one of the preceding claims, **characterized in that** mutually facing surfaces (7b) of the two superposed support portions (7) contact one another, preferably contact one another with a close fit.

6. Rod belt (1) according to claim 5, **characterized in that** the mutually facing surfaces (7b) of the superposed support portions (7) are arched complementary to one another, preferably are arched transversely to the longitudinal direction (L).

7. Rod belt (1) according to claim 5 or 6, **characterized in that** a groove-pin combination (18) is formed on the mutually facing surfaces (7b).

8. Rod belt (1) according to one of claims 5 to 7, **characterized in that** the mutually facing surfaces (7b) of the superposed support portions (7) taper conically in the longitudinal direction (L) complementary to one another.

9. Rod belt (1) according to one of claims 5 to 8, **characterized in that** the mutually facing surfaces (7b) of the superposed support portions (7) are stepped in the longitudinal direction (L) complementary to one another.

10. Rod belt (1) according to one of the preceding claims, **characterized in that** the superposed support portions (7) of the two fastening elements (6) are arranged between two upper lugs (5) of the inner belt (2) projecting from the belt top side (2b) in the vertical direction (V) and are fastened on the inner belt (2) by fastening means (10), for example rivets, which pass through the two superposed support portions (7) and the inner belt (2).

11. Rod belt (1) according to one of the preceding claims, **characterized in that** a distance (A) between the respective belt outer side (2a) of the inner belt (2) and at least one intermediate portion (8) of the two superposed fastening elements (6) is at most 10 mm or at least one intermediate portion (8) of the two superposed fastening elements (6) contacts the respective belt outer side (2a).

12. Rod belt (1) according to one of the preceding claims, **characterized in that** the rod end (3a) of the respective rod (3) is fixed axially and/or in a torsion-proof manner on the intermediate portion (8), for example by a rivet connection.

13. Rod belt (1) according to one of the preceding claims, **characterized in that** a fastening portion (9) projects from the intermediate portion (8) in the longitudinal direction (L), wherein the fastening portion (9) is formed by at least one bushing (11) having an insertion opening (13) extended in the longitudinal direction (L) over an insertion depth (ET), into which the rod end (3a) of the rod (3) is inserted.

14. Rod belt (1) according to one of the preceding claims, **characterized in that** at least two rods (3), preferably at least three rods (3), are received on a fastening element (6) via the respective intermediate portion (8), wherein a distance between the received rods (3) is selected as a function of a predetermined rod pitch (TS) between the rods (3) on the rod belt (1), wherein the rod pitch (TS) is smaller than a lug pitch (TN) between lower lugs (4) and/or upper lugs (5) on the respective belt (2).

15. Rod belt (1) according to one of the preceding claims, **characterized in that** the respective fastening element (6) is produced partially or completely in a subtractive or additive manufacturing process, preferably using a metallic material or a thermoplastic or a thermosetting polymer, for example in a milling process or 3D printing process, or is configured as a cast part, preferably made of a metallic material or a thermoplastic or a thermosetting polymer.

## Revendications

1. Bande à barreaux (1) pour machines agricoles, comprenant
- au moins trois courroies sans fin (2) parallèles entre elles, résistantes à la traction et élastiques, qui s'étendent dans un sens machine (R) et présentent chacune une face (2b) supérieure de courroie et une face (2c) inférieure de courroie, une courroie (2) intérieure s'étendant entre deux courroies (2) extérieures,
- des pièces de fixation (6) qui sont reliées aux courroies (2), et
- des barreaux (3) disposés transversalement au sens machine (R) et parallèlement les uns aux autres, qui s'étendent chacun entre deux des courroies (2),
**caractérisée en ce que**
les barreaux (3) sont chacun maintenus par leurs extrémités de barreau (3a) par des pièces de fixation (6) reliées à la courroie (2) respective, les barreaux (3) eux-mêmes n'étant pas fixés directement à la courroie (2) intérieure par leurs extrémités de barreau (3a), mais étant fixés à la courroie (2) intérieure par l'intermédiaire des pièces de fixation (6),
dans laquelle la pièce de fixation (6) respective comprend au moins :
- une zone d'appui (7) s'étendant dans une direction longitudinale (L), par l'intermédiaire de laquelle la pièce de fixation (6) est fixée à la courroie (2) respective de la bande à barreaux (1), et
- une zone intermédiaire (8) réalisée d'un seul tenant avec la zone d'appui (7), sur laquelle au moins un barreau (3) est maintenu par son extrémité de barreau (3a) directement et/ou par l'intermédiaire d'une douille supplémentaire (11),
dans laquelle deux des pièces de fixation (6) sont fixées sur la courroie (2) intérieure de la bande à barreaux (1) avec leurs zones d'appui (7) superposées de sorte que les zones intermédiaires (8) situées au niveau des deux zones d'appui (7) superposées sont adjacentes à des côtés extérieurs (2a) différents de la courroie (2) intérieure et que les barreaux (3) qui y sont maintenus s'étendent à partir de la courroie (2) intérieure dans des directions opposées.

2. Bande à barreaux (1) selon la revendication 1, **caractérisée en ce que** les zones intermédiaires (8) des deux pièces de fixation (6) superposées sont de préférence de forme non circulaire et/ou sont moulées de manière excentrique sur la zone d'appui (7) respective et, à partir des zones d'appui (7) respectives, auxquelles elles sont reliées d'un seul tenant, sont inclinées vers le bas dans la direction verticale (V) en direction de la face (2c) inférieure de courroie, de préférence à la verticale.

3. Bande à barreaux (1) selon la revendication 2, **caractérisée en ce que** les axes longitudinaux (3b) des barreaux (3) maintenus directement et/ou par l'intermédiaire de la douille (11) respective sur la zone intermédiaire (8) respective s'étendent, vus depuis la face (2b) supérieure de courroie, dans la direction verticale (V) en dessous de la zone d'appui (7) de la pièce de fixation (6) respective ainsi que dans la direction verticale (V) en dessous de la face (2b) supérieure de courroie de la courroie (2), dans laquelle les axes longitudinaux (3b) des barreaux (3) respectivement maintenus s'étendent de préférence dans le plan d'une fibre neutre (15) de la courroie (2) intérieure ou s'étendent au-dessus, dans la direction verticale (V), en direction de la face (2b) supérieure de courroie, ou en dessous, dans la direction verticale (V), en direction de la face (2c) inférieure de courroie, du plan de la fibre neutre (15) de la courroie (2) intérieure, en particulier dans une zone de +/- 2 mm autour de la fibre neutre (15).

4. Bande à barreaux (1) selon l'une des revendications précédentes, **caractérisée en ce que** les zones intermédiaires (8) des deux pièces de fixation (6) superposées sont disposées sur la zone d'appui (7) respective de sorte qu'au moins deux des barreaux (3) maintenus par celles-ci et s'étendant dans des directions opposées sont sensiblement alignés l'un avec l'autre, dans laquelle les axes longitudinaux (3b) des barreaux (3) s'étendant dans des directions opposées ne s'écartent pas de plus de 3 mm l'un de l'autre.

5. Bande à barreaux (1) selon l'une des revendications précédentes, **caractérisée en ce que** les surfaces (7b) en regard des deux zones d'appui (7) superposées se touchent, de préférence avec précision.

6. Bande à barreaux (1) selon la revendication 5, **caractérisée en ce que** les surfaces (7b) en regard des zones d'appui (7) superposées sont incurvées de manière complémentaire l'une par rapport à l'autre, de préférence transversalement à la direction longitudinale (L).

7. Bande à barreaux (1) selon la revendication 5 ou 6, **caractérisée en ce qu'**une combinaison rainure-tenon (18) est formée sur les surfaces (7b) en regard.

8. Bande à barreaux (1) selon l'une des revendications 5 à 7, **caractérisée en ce que** les surfaces (7b) en regard des zones d'appui (7) superposées se rétrécissent coniquement de manière complémentaire l'une par rapport à l'autre dans la direction longitudinale (L).

9. Bande à barreaux (1) selon l'une des revendications 5 à 8, **caractérisée en ce que** les surfaces (7b) en regard des zones d'appui (7) superposées sont décalées de manière complémentaire l'une par rapport à l'autre dans la direction longitudinale (L).

10. Bande à barreaux (1) selon l'une des revendications précédentes, **caractérisée en ce que** les zones d'appui (7) superposées des deux pièces de fixation (6) sont disposées entre deux ergots supérieurs (5) de la courroie intérieure (2) faisant saillie de la face (2b) supérieure de courroie dans la direction verticale (V) et sont fixées à la courroie (2) intérieure par des moyens de fixation (10), par exemple des rivets, qui traversent les deux zones d'appui (7) superposées et la courroie (2) intérieure.

11. Bande à barreaux (1) selon l'une des revendications précédentes, **caractérisée en ce que** la distance (A) entre la face (2a) extérieure respective de la courroie (2) intérieure et au moins une zone intermédiaire (8) des deux pièces de fixation (6) superposées est au maximum de 10 mm ou au moins une zone intermédiaire (8) des deux pièces de fixation (6) superposées touche la face (2a) extérieure de courroie respective.

12. Bande à barreaux (1) selon l'une des revendications précédentes, **caractérisée en ce que** l'extrémité de barreau (3a) de chaque barreau (3) est fixée de manière axiale et/ou solidairement en rotation à la zone intermédiaire (8), par exemple au moyen d'un assemblage rivé.

13. Bande à barreaux (1) selon l'une des revendications précédentes, **caractérisée en ce qu'**une zone de fixation (9) s'étend dans la direction longitudinale (L) depuis la zone intermédiaire (8), la zone de fixation (9) étant formée par au moins une douille (11) comprenant une ouverture d'insertion (13) s'étendant dans la direction longitudinale (L) sur une profondeur d'insertion (ET), dans laquelle l'extrémité de barreau (3a) du barreau (3) est insérée.

14. Bande à barreaux (1) selon l'une des revendications précédentes, **caractérisée en ce qu'**au moins deux barreaux (3), de préférence au moins trois barreaux (3), sont reçus sur une pièce de fixation (6) par l'intermédiaire de la zone intermédiaire (8) respective, dans laquelle la distance entre les barreaux (3) reçus est choisie en fonction d'un pas de barreau (TS) prévu entre les barreaux (3) sur la bande à barreaux (1), le pas de barreau (TS) étant inférieur à un pas d'ergot (TN) entre des ergots inférieure (4) et/ou des ergots supérieure (5) sur la courroie (2) respective.

15. Bande à barreaux (1) selon l'une des revendications précédentes, **caractérisée en ce que** la pièce de fixation (6) respective est fabriquée partiellement ou entièrement selon un procédé de fabrication soustractif ou additif, de préférence en utilisant un matériau métallique ou un polymère thermoplastique ou thermodurcissable, par exemple dans un procédé de fraisage ou un procédé d'impression 3D, ou est réalisée sous forme de pièce moulée, de préférence à partir d'un matériau métallique ou d'un polymère thermoplastique ou thermodurcissable.
